# EUROPÄISCHE PATENTSCHRIFT

(11) **EP 1 493 998 B1**
(45) Veröffentlichungstag und Bekanntmachung des Hinweises auf die Patenterteilung: **02.11.2016**
(21) Anmeldenummer: 04013456.1
(22) Anmeldetag: 08.06.2004
(51) Int. Cl.: G01F 1/66

(54) **Ultraschallzähler zur Bestimmung der Durchflussmenge eines strömenden Mediums**
Ultrasonic flow counter to determine flow rate of a flowing medium
Compteur d' écoulement ultrasonique pour la détermination du débit d'un milieu en écoulement

(30) Priorität: 13.06.2003 DE 10327076; 01.03.2004 DE 102004010408
(43) Veröffentlichungstag der Anmeldung: 05.01.2005
(60) Teilanmeldung: 08009694.4
(73) Patentinhaber: Diehl Metering GmbH, 91522 Ansbach (DE)
(72) Erfinder: Sonnenberg, Hans-Michael, 90616 Neuhof/Zenn (DE); Messthaler, Roland, 91575 Windsbach (DE)
(74) Vertreter: Stippl, Hubert

(56) Entgegenhaltungen:
- EP-A- 0 897 102
- EP-A1- 0 559 938
- EP-A2- 1 065 474
- EP-A2- 1 235 057
- DE-A1- 19 944 411
- DE-C1- 10 047 383
- US-A- 5 043 706

## Beschreibung

Die vorliegende Erfindung betrifft einen Ultraschallzähler zur Bestimmung der Durchflussmenge eines strömenden Mediums, insbesondere Flüssigkeit oder Gas, mit einem Gehäuse, einer innerhalb des Gehäuses angeordneten Messstrecke, entlang der eine Laufzeitmessung, insbesondere Differenzlaufzeitmessung, durchführbar ist, mindestens einem Ultraschallwandler, mindestens einem Umlenkspiegel, der stromaufseitig zum strömenden Medium liegt, mittels dem die Ultraschallwelle des Ultraschallwandlers zum Messrohr hin umgelenkt wird. Bei Differenzlaufzeitmessung erfolgt die gegenläufige Messung entweder über Reflektion des Ultraschallsignals des Ultraschallwandlers oder über ein von einem weiteren Ultraschallwandler abgesandten Ultraschallsignals am gegenüberliegenden Ende der Messstrecke.

Die EP-A-0 559 938 A1 beschreibt eine Durchflußmesseinrichtung gemäß dem Oberbegriff des Anspruchs 1. Die Durchflußmesseinrichtung umfasst ein Messrohr, welches als Kunststoffteil ausgeführt ist und in das Reflektoren eingespritzt sind. In Durchflußrichtung gesehen ist das Messrohr nach Art einer ansteigenden Rampe ausgebildet, nach deren Scheitelpunkt sich der jeweilige Reflektor in entgegengesetzter Neigung befindet.

Die DE 201 07 894 U1 offenbart ein Ultraschallflussmessgerät bei dem die Oberkante des strömungsabgewandten Umlenkspiegels von dem Medium umströmt wird, wodurch sich eine Rezirkulationszone bzw. Zonen reduzierter Strömungsgeschwindigkeit im Bereich der Oberfläche des ersten Ablenkspiegels bilden, die Verschmutzungen auf dem Ablenkspiegel verursachen. Hierdurch leidet die Langzeitstabilität des Ultraschallflussmessgerätes.

Die DE 199 30 278 A1 beschreibt einen Ultraschallzähler mit einem ersten Umlenkspiegel, welcher parallel zum Strömungsverlauf ausgerichtete Bohrungen beinhaltet, die einer Verschmutzung des Umlenkspiegels entgegenwirken sollen. Die darin beschriebenen Umlenkspiegel sind allerdings in ihrer Fertigung sehr aufwendig, da eine Vielzahl von Bohrungen, die nicht senkrecht zur Spiegelebene stehen, eingebracht werden müssen.

Die EP-A-199 44 411 A1 betrifft einen Ultraschall-Durchflußmesser, bei dem die Reflektoren ebenfalls in das Messrohr integriert sind. In Strömungsrichtung betrachtet verläuft der Querschnitt des Messrohrs zunächst konstant und erweitert sich anschließend knickartig nach außen. Der Reflektor befindet sich unmittelbar im Anschluss an den Knickpunkt.

EP-A-1 235 057 A2 betrifft eine Konstruktion eines Ultraschalldurchflußmessers mit einem Freistrahl, der sich durch einen Raum bewegt, in dem zwei Reflektoren diametral gegenüberliegend und seitlich zum Freistrahl positioniert sind.

EP-A-0 897 102 A1 beschreibt einen Ultraschalldurchflußmesser mit einem Reflektor unter Verwendung eines Reflektorhalters, der im Bereich seiner Anströmseite einen Verdrängungskörper aufweist, um den Staudruck und damit den Druckverlust des Ultraschall-Durchflußmessers zu verringern. An der Oberseite des Verdrängungskörpers liegt eine Abrisskante vor. Der Reflektor befindet sich im Strömungsschatten der Abrisskante.

Die EP-A-1 065 474 A2 offenbart einen Ultraschallzähler mit sich über den gesamten Strömungsquerschnitt erstreckenden, einzelne Durchgangsbohrungen aufweisenden Reflektoren. Die Reflektoren umfassen zwei unterschiedlich geneigte Abschnitte, die derart unterteilt sind, dass jeweils von einem Reflektorabschnitt die Teilschallkeulen auf den jeweils anderen Reflektorabschnitt gelenkt werden. Hierdurch ergibt sich der Vorteil, dass das Gleichheitsprinzip für die Schallausbreitung in und gegen die Strömungsrichtung wesentlich verbessert wird und Signalstörungen durch induzierte Sekundärströmungen in den Todwasserbereichen kompensiert werden.

Die DE-A-100 47 383 C1 offenbart einen Ultraschall-Durchflußmesser unter Verwendung von Umlenkspiegeln, die ausgehend von einem flachen Stanzteil durch Abwinkeln hergestellt werden, so dass Umlenkspiegel, Haltebügel sowie Haltekopf als einstückiges Bauteil vorgesehen sind.

Die US 5 043 706 offenbart eine Messwandleranordnung zur Durchflussmessung, bei der zwei Umlenkspiegel mit konischen Umlenkspiegeloberflächen eingesetzt werden. Die Messwandleranordnung besitzt ein Gehäuse mit zwei ausgeweiteten Bereichen. Innerhalb der zwei ausgeweiteten Bereiche im Inneren des Gehäuses ist je ein Umlenkspiegel mit Haltern am Gehäuse befestigt.

Die Aufgabe der vorliegenden Erfindung besteht darin, einen neuartigen Ultraschallzähler zur Verfügung zu stellen, welcher sich einerseits durch Langzeitstabilität und Verschmutzungsunempfindlichkeit auszeichnet, andererseits aber einfach und kostengünstig herzustellen ist.

Die vorstehende Aufgabe wird beim gattungsgemäßen Ultraschallzähler durch die kennzeichnenden Merkmale des Anspruchs 1 gelöst. Dadurch, dass der Spiegelhalter in Form eines angrenzenden Spiegelhalterfortsatzes gestaltet ist, wobei Letzterer im Wesentlichen bündig an der Oberfläche des ersten Umlenkspiegels anliegt, wird sozusagen die Oberfläche des Umlenkspiegels mittels dem Spiegelhalterfortsatz aufgenommen und nach oben hin verlängert. Damit wird erreicht, dass sich die Rezirkulationszone von der Oberfläche des Umlenkspiegels in den Bereich des Spiegelhalterfortsatzes verschiebt.

Eine Ausführungsform der vorliegenden Erfindung ist dadurch gekennzeichnet, dass der Umlenkspiegelhalter zweckmäßigerweise aus zwei entlang einer in Fließrichtung des Mediums verlaufenden Trennlinie zusammensetzbaren Hälften besteht. Dies erleichtert zum einen den Einsatz des Spiegels sowie zum anderen die Herstellung des Umlenkspiegelhalters als aufwendig geformtes Kunststoffformteil. Auch können identische Hälften für zusätzliche Umlenkspiegel im Ultraschallzähler vorgesehen sein. Diese Idee ermöglicht eine optimale Fixierung der Umlenkspiegel, was eine wichtige Voraussetzung zur Gewährleistung einer Langzeitstabilität des Ultraschallzählers ist.

Wenn der Umlenkspiegelhalter Mittel zur Fixierung des Messrohrs aufweist, ist vorteilhafterweise keine Gehäusebearbeitung notwendig.

Ferner können die thermischen Ausdehnungskoeffizienten von Spiegelhalter, Gehäuse und/oder Spiegel angepasst sein.

Der Umlenkspiegel weist zweckmäßigerweise parallele Halteflächen auf. Er kann z. B. vieleckig, insbesondere achteckig ausgebildet sein, wodurch bessere Fixiergenauigkeiten beim Einbau erreicht werden. Die Fixierung des Spiegels erfolgt hierbei z. B. formschlüssig entweder über die vier rechtwinkeligen Flächen oder über die vier diagonalen Flächen.

Weiterhin können durch entsprechende Taschen im Halter die Spiegel formschlüssig gehalten werden, was die Langzeitstabilität erhöht.

Der Gegenstand des Anspruchs 5 hat den Vorteil, dass - aufgrund der besonderen Fixierung - eine reduzierte Toleranz der Bauteile möglich wird.

Eine Ausführungsform der vorliegenden Erfindung ist dadurch gekennzeichnet, dass Umlenkspiegelhalter, Umlenkspiegel sowie Messrohr als Einheit aus dem Gehäuse des Ultraschallzählers heraus- bzw. in dieses hineinschiebbar sind und zwar insbesondere ohne Demontage des jeweiligen Ultraschallwandlers. Die Wartung und der Service werden hierdurch ganz besonders vereinfacht.

Zweckmäßigerweise befindet bzw. befinden sich der oder die Ultraschallwandler im Gehäuse des Ultraschallzählers, beispielsweise bündig mit der Innenoberfläche des Messrohrs verlaufend oder weiter nach innen in das Gehäuse des Ultraschallzählers hinein versetzt.

Der Umlenkspiegelhalter ist von mindestens einem, vorzugsweise zwei Dichtringen umgeben, die zum einen eine Dichtwirkung des Umlenkspiegelhalters zum Gehäuse des Ultraschallzählers bewirken, zum anderen die Einheit bestehend aus Umlenkspiegelhalter, Umlenkspiegel und Messrohr zusammenhalten, so dass diese beim Einsetzen bzw. Herausziehen besonders einfach handhabbar ist.

Zweckmäßige Ausgestaltungen der vorliegenden Erfindung werden nachstehend anhand von Zeichnungen näher erläutert.

Es zeigen:
- Fig. 1: eine vereinfachte Schnittdarstellung eines Ultraschallzählers;
- Fig. 2: zeigt in stark vereinfachter schematischer Darstellungsweise die Ausbildung einer Rezirkulationszone bei einem Umlenkspiegel des Standes der Technik;
- Fig. 3: zeigt einen Umlenkspiegel sowie Umlenkspiegelhalter;
- Fig. 4: zeigt eine weitere Ausgestaltung eines Umlenkspiegels sowie Umlenkspiegelhalters in Längsschnittdarstellung (Fig. 4 A), in stirnseitiger Draufsicht auf den Umlenkspiegel (Fig. 4 B) sowie eine Hälfte des Umlenkspiegelhalters in perspektivischer Darstellungsweise (Fig. 4 C);
- Fig. 5: zeigt in stark vereinfachter, schematischer Darstellungsweise einen Umlenkspiegel sowie Umlenkspiegelhalter mit einem Rücklaufkanal, der in den Umlenkspiegelhalter integriert ist (Fig. 5 A) sowie mit einem Rücklaufkanal, der vom Spiegelhalterfortsatz sowie einem zusätzlichen Teil gebildet ist (Fig. 5 B);
- Fig. 6: einen Umlenkspiegel sowie Umlenkspiegelhalter gemäß der Erfindung mit einem verlängerten Spiegelhalterfortsatz;
- Fig. 7: eine weitere Ausgestaltung des erfindungsgemäßen Ultraschallzählers im Längsschnitt sowie perspektivischer Darstellung mit Messeinsatz;
- Fig. 8: den Messeinsatz des Ultraschallzählers gemäß Fig. 7 im ausgebauten Zustand sowie
- Fig. 9: den Bereich des Umlenkspiegelhalters des Ultraschallzählers nach Fig. 7 in stromaufseitiger Draufsicht.

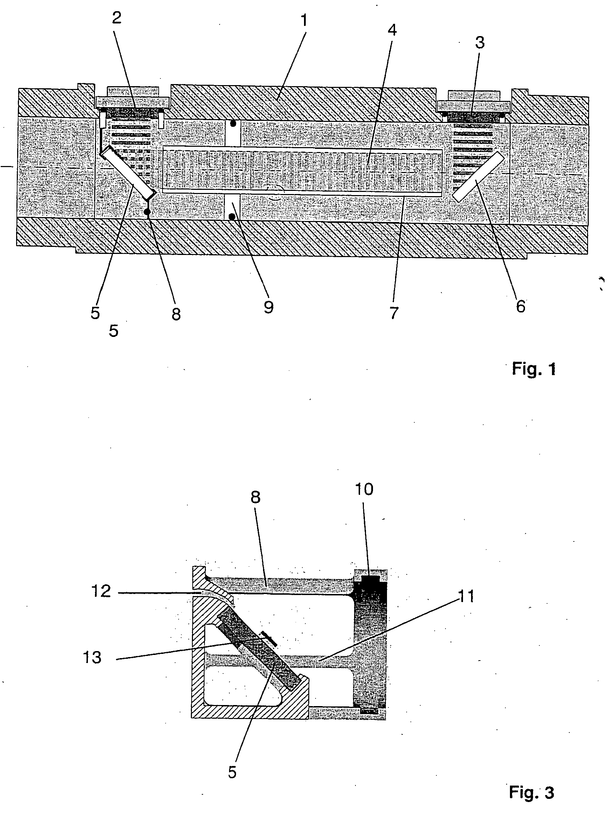

Die Ausgestaltungen der Fig. 3 bis 5 gehören nicht zur Erfindung.

Die Darstellung in Fig. 1 zeigt einen gattungsgemäßen Ultraschallzähler mit einem Gehäuse 1, einem Ultraschallwandler 2 sowie einem weiteren Ultraschallwandler 3, welche jeweils über hierfür vorgesehene Gehäuseöffnungen in der Seitenwandung des Gehäuses 1 eingesetzt und durch zugehörige Abdeckungen mit Dichtungen in der Wandung des Gehäuses 1 gehalten sind.

Dem Ultraschallwandler 2 ist ein Umlenkspiegel 5, dem weiteren Ultraschallwandler 3 ein weiterer Umlenkspiegel 6 zugeordnet. Die Messstrecke 4 (d. h. der Weg der Schallsignale) verläuft vom Ultraschallwandler 2 zum Umlenkspiegel 5, von Letzterem zum weiteren Umlenkspiegel 6 und von diesem zum weiteren Wandler 3 und von diesem gegenläufig zurück. Die Messstrecke 4 hat demzufolge eine U-Form. Es können aber im Rahmen der Erfindung auch weitere Spiegel (nicht dargestellt) und eine diagonal verlaufende Schallführung vorhanden sein (nicht dargestellt).

Der Bereich zwischen beiden Umlenkspiegeln 5 bzw. 6 der Messstrecke 4 wird von einem Messrohr 7 umgeben, welches über einen Messrohrhalter 9 im Gehäuse 1 gehalten wird.

Das Medium, z. B. Brauchwasser, fließt über einen nicht dargestellten Einlauf in der Darstellung von Fig. 1 von links ein, umströmt den Umlenkspiegel 5, strömt entlang der Messstrecke 4, umströmt den weiteren Umlenkspiegel 6 und verlässt den Ultraschallzähler im Bereich des (ebenfalls nicht dargestellten) Auslasses. Die Umlenkspiegel 5 bzw. 6 werden jeweils von einem Umlenkspiegelhalter 8 fixiert, von dem lediglich Umlenkspiegelhalter 8 im Bereich des Umlenkspiegels 5 in Fig. 1 dargestellt ist.

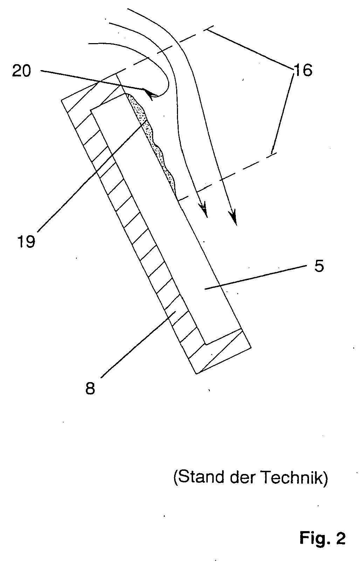

Beim Stand der Technik ergibt sich das Problem, dass beim Umströmen des Umlenkspiegels 5 insbesondere im Bereich von dessen Oberseite sich z. B. eine sogenannte Rezirkulationszone 16 ausbildet, welche mit fortschreitender Zeit zu Ablagerungen auf der Oberfläche des Umlenkspiegels und damit zu einer Beeinträchtigung des Langzeitbetriebs führen kann. Diese Ablagerungen sind in Fig. 2 (übertrieben) mit der Bezugsziffer 19 dargestellt. Als Rezirkulationszone wird der Bereich bezeichnet, in dem sich Rezirkulationswirbel 20 entlang der Oberfläche des Umlenkspiegels 5 ausbilden.

Eine Ausgestaltung des Ultraschallzählers ist in Fig. 3 näher erläutert. Demzufolge befindet sich im Bereich des Umlenkspiegelhalters 8 eine Düse 12 zur Erzeugung eines Teilstroms, welcher im oberen Bereich der Oberfläche des ersten Umlenkspiegels 5 parallel zu dessen Oberfläche gerichtet ist. Dieser Teilstrom verhindert die Ausbildung von Rezirkulationswirbeln 20 und damit einer Rezirkulationszone. Die Düse weist einen leicht gekrümmten Verlauf auf und verläuft zur Spiegeloberfläche hin mit sich stetig verjüngendem Querschnitt. Die Düse 12 ist zweckmäßigerweise flach ausgebildet, damit der Teilstrom einen breiteren Oberflächenbereich des Umlenkspiegels 5 erfasst.

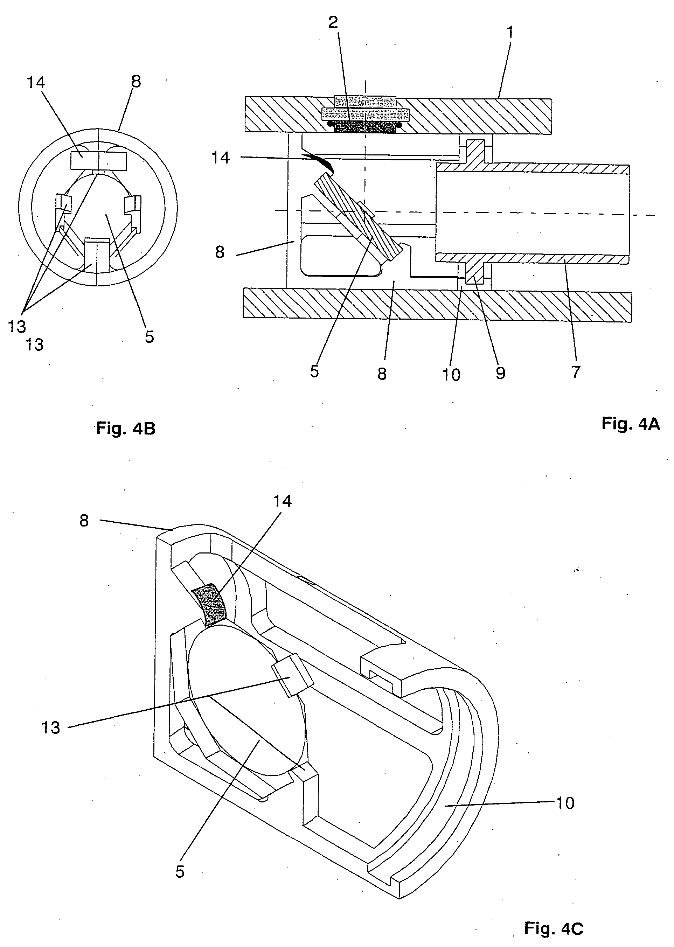

Der Halter 8 ist hülsenförmig ausgebildet und wird axial in das Gehäuse 1 des Ultraschallzählers eingeschoben. Darüber hinaus weist der Halter 8 zweckmäßigerweise - wie in Fig. 3 dargestellt - umfänglich angeordnete, großflächige Durchbrüche auf. In dem der Halterung des Umlenkspiegels 5 gegenüberliegenden Bereich des Umlenkspiegelhalters 8 befindet sich eine umlaufende Vertiefung, die als Aufnahme 10 für einen in Fig. 3 nicht dargestellten Messrohrhalter (Bezugsziffer 9 in Fig. 4 A) dient.

Der Umlenkspiegel 5 wird in eine Anordnung von einer Mehrzahl von gegenüberliegenden Haltevorsprüngen 13 an zwei zueinander parallelen Flächen fixiert, von denen in Fig. 3 lediglich zwei der Übersichtlichkeit halber dargestellt sind.

Aufgrund der Ausbildung sowie Anordnung der Düse 12 wird eine im Vergleich zum Volumen der Hauptströmung geringe Teilströmung parallel zur Oberfläche des ersten Umlenkspiegels 5 an dessen oberseitigem Ende mit hoher Geschwindigkeit eingebracht und bedingt damit eine Vermeidung oder zumindest erhebliche Reduzierung der Ausbildung von Rezirkulationswirbeln 20 im Bereich der Oberfläche des Umlenkspiegels 5. Dadurch, dass die Teilströmung lediglich einen Bruchteil (die Querschnittsverhältnisse liegen bei 2 - 4 mm² bei 50 - 400 mm² für Hauptströmung) der Gesamtströmung umfasst, beispielsweise 1:100 der Gesamtströmung, entsteht durch die Teilströmung keine wesentliche Verfälschung der Hauptströmung und damit keine negative Beeinträchtigung der Messeigenschaften des Ultraschallzählers.

Der Umlenkspiegelhalter besteht zweckmäßigerweise aus einem Material mit hohem Elastizitätsmodul, insbesondere aus Kunststoff, z. B. aus faserverstärkten Kunststoffen wie PES, PSU, PPSU, PPA, PEI, PEEK/PEAK einschließlich deren Derivate PPS oder PPE. Insbesondere kann durch Beimengen von Glas oder Kohlefasern die Wärmeausdehnung dem Gehäuse (typisch Metall) angepasst werden.

Die Haltestege 11 des Umlenkspiegelhalters 8 sind im Querschnitt klein gehalten, beispielsweise kleiner als 4 mm² (z. B. 2 x 2 mm), um den Druckverlust bei der Spiegelumströmung gering zu halten sowie die Haltestege 11 akustisch vernachlässigen zu können. Die Querschnittsgeometrie der Haltestege 11 des Umlenkspiegelhalters 8 hat zweckmäßigerweise eine die Verwirbelung des Mediums begünstigende Form, wie dies später noch näher erläutert werden wird.

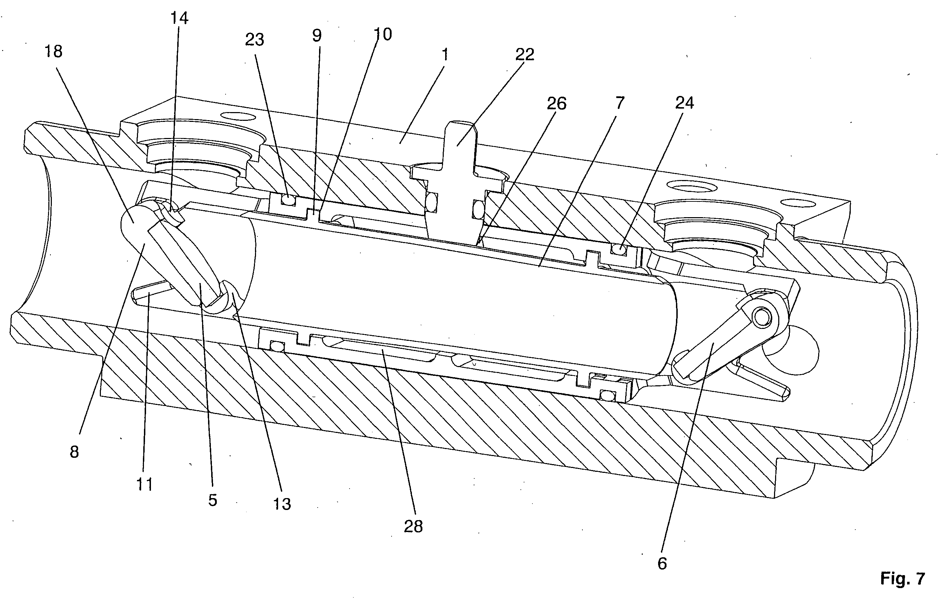

Alternativ können die Haltestege 11 des Umlenkspiegelhalters 8 - vgl. Fig. 7 - aber auch eine gleichrichtende Wirkung auf die Strömung, insbesondere auf die Einlaufströmung haben.

Auch größere Fremdkörper, die den Ultraschallzähler beschädigen könnten, werden durch die Haltestege 11 des Umlenkspiegelhalters 8 bzw. deren Anordnung abgefangen. Die Haltestege 11 können alternativ auch siebförmig ausgebildet sein.

Der in Figur 4A dargestellte Umlenkspiegelhalter 8 entspricht dem Umlenkspiegelhalter 8 der Ausgestaltung nach Fig. 3. Anstelle der Düse ist bei der Ausgestaltung nach Fig. 4A eine Anordnung von Leitflügeln 14 vorgesehen. Diese Leitflügel 14 gewährleisten ebenfalls die Ausbildung einer entsprechenden Teilströmung, die am oberen Ende des Umlenkspiegels 5 parallel zu dessen Oberfläche gerichtet eintritt.

Zur Gewährleistung einer einfachen Herstellbarkeit, insbesondere als Kunststoffformteil, ist der Umlenkspiegelhalter 8 der Ausgestaltung nach Fig. 3 sowie Fig. 4 in Form zweier längsgeschnittener Hälften ausgebildet, wie sich dies aus Fig. 4B ergibt. Die beiden Hälften sind spiegelsymmetrisch zueinander ausgebildet. Die Leitflügel 14 einer jeden Hälfte des Umlenkspiegelhalters 8 können als zusätzlich vorgesehenes Teil angeordnet sein oder in das Formteil integriert sein.

Aus Fig. 4A wird darüber hinaus die Befestigung des Messrohrs 7 über dessen Messrohrhalter 9 sowie die Aufnahme 10 für den Messrohrhalter 9 erkennbar. In Fig. 4B sind identische Merkmale der beiden Hälften des Umlenkspiegelhalters 8 lediglich einmal gezeichnet.

Bis auf den herausgestellten Unterschied gelten alle zu der Ausgestaltung nach Fig. 3 erwähnten Merkmale gleichermaßen auch für die Ausgestaltung nach Fig. 4.

Wie aus den Figuren 4B sowie 4 C weiterhin hervorgeht, ist der Umlenkspiegel 5 achteckig ausgebildet und wird über entsprechende Haltevorsprünge 13, die an diametral einander gegenüberliegenden parallelen Kanten angreifen, gehalten. Hierdurch wird eine besonders sichere Fixierung des Umlenkspiegels 5 gewährleistet.

Der erste Umlenkspiegel 5 besteht zweckmäßigerweise aus einem Blechteil, welches entweder gestanzt oder wasserstrahlgeschnitten ist.

Die vorstehenden Ausführungen zum ersten Umlenkspiegel 5 gelten in gleicher Weise für die Ausgestaltung des Ultraschallzählers nach Fig. 3 sowie für die nachfolgend beschriebenen Ausgestaltungen.

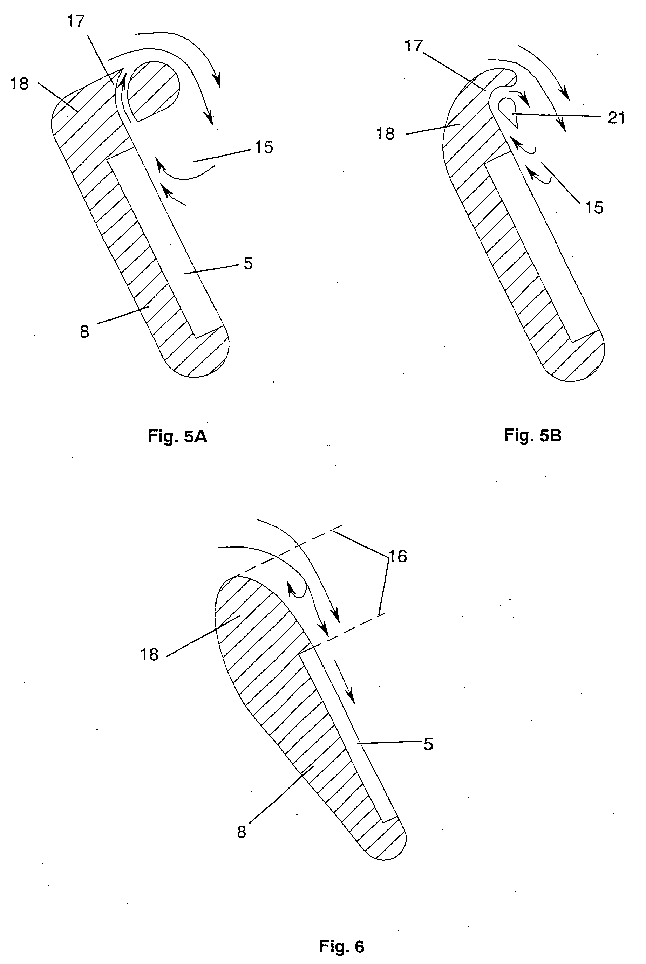

In der Ausgestaltung nach Fig. 5A, welche lediglich den Umlenkspiegel 5 sowie den diesbezüglichen Umlenkspiegelhalter 8 zeigt, wird über einen Venturi-Effekt ein partieller Unterdruck zur Erzeugung einer gerichteten Rückströmung 15 entlang eines Bereichs der Oberfläche des Umlenkspiegels 5 erzeugt. Hierzu ist an der Oberseite des Spiegelhalterfortsatzes 18 eine gewölbte Leitfläche zusammen mit einem Rücklaufkanal 17 vorgesehen. Der Rücklaufkanal 17 verläuft aus der Ebene der Oberfläche des Umlenkspiegels 5 leicht gekrümmt in Richtung der Strömung. Die hierdurch erzeugte Rückströmung 15 gewährleistet ein permanentes Absaugen von Ablagerungen im Bereich der Spiegeloberfläche und damit einen Selbstreinigungseffekt.

Das gleiche gilt für die Ausgestaltung nach Fig. 5B. Der einzige Unterschied besteht hierbei darin, dass der Rücklaufkanal 17 durch den Spiegelhalterfortsatz 18 einerseits sowie durch eine zusätzlich vorgesehene Nase 21 gebildet ist.

Bei der erfindungsgemäßen Ausgestaltung nach Fig. 6 ist ebenfalls ein Spiegelhalterfortsatz 18 vorgesehen, welcher an dessen Oberseite eine gewölbte Leitfläche aufweist. Hierbei ist der Spiegelhalterfortsatz 18 langgestreckt, damit eine verlängerte, im Wesentlichen ebene Oberfläche sich bündig an das obere Ende der Oberfläche des Umlenkspiegels 5 anschließt. Hierdurch wird eine Verlagerung der Rezirkulationszone 16 in den Bereich des Spiegelhalterfortsatzes 18 bewirkt. Gleichzeitig erfolgt eine im Wesentlichen parallel zur Oberfläche des ersten Umlenkspiegels 5 gerichtete Strömung, die Ablagerungen in diesem Bereich unterbindet.

Fig. 7 zeigt eine weitere Ausgestaltung des erfindungsgemäßen Ultraschallzählers im Längsschnitt. Besonders gut zu erkennen ist der stromlinienförmig geformte Umlenkspiegelhalter 8 einschließlich der Haltestege 11. Der Umlenkspiegelhalter 8 ist ein einziges Formteil und umfasst die Aufnahme des Umlenkspiegels 5, die Haltestege 11 sowie die Aufnahme 10 für den Messrohrhalter 9 des Messrohrs 7.

Bei der Ausgestaltung nach Fig. 7 ist der Umlenkspiegelhalter 8 über die Gesamtlänge der Messstrecke 4 einteilig ausgebildet, d. h. trägt sowohl den einen Umlenkspiegel 5 als auch den weiteren Umlenkspiegel 6. Darüber hinaus wird der Umlenkspiegelhalter 8 über ein zentral angebrachtes Fixierelement 22 in Position gehalten, wodurch die Bauteile (aufgrund der symmetrischen Fixierung) mit einer reduzierten Toleranz gefertigt werden können.

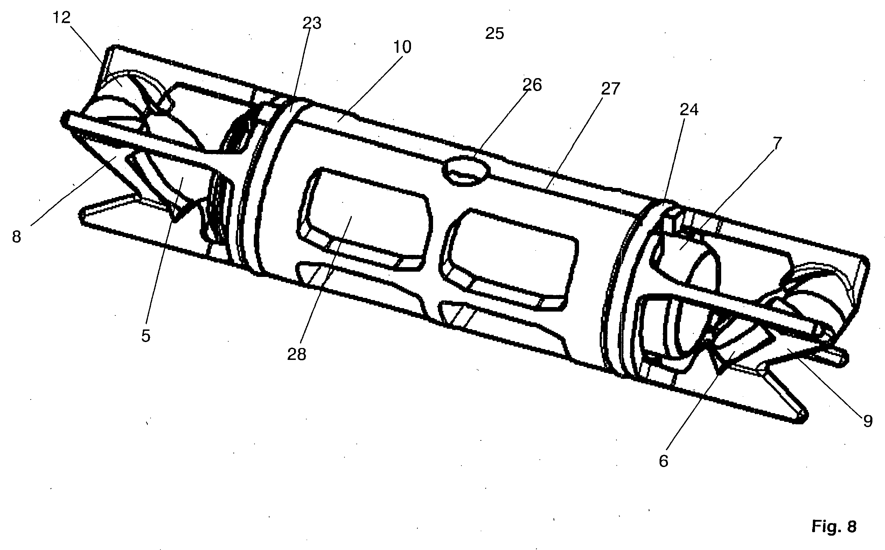

Gleichzeitig nimmt der einteilige Umlenkspiegelhalter 8 das Messrohr 7 auf. Hierzu ist der Umlenkspiegelhalter 8 - quer zur Messstrecke 4 betrachtet - zweigeteilt, so dass zwischen die beiden Schalen des Umlenkspiegelhalters 8 der jeweilige Umlenkspiegel 5 bzw. 6 sowie das Messrohr 7 eingesetzt und der hierdurch gebildete Messeinsatz 25, vgl. Fig. 8, durch umlaufende Dichtringe 23, 24 zusammengehalten wird. In dieser Form kann der Messeinsatz 25 in einfacher Weise in das Gehäuse 1 des Ultraschallzählers eingeschoben bzw. herausgenommen werden. Die Dichtringe 23, 24 dienen darüber hinaus zur Abdichtung desjenigen Bereichs des Messeinsatzes 25, an dem das Fixierelement 22 angreift. Der Umlenkspiegelhalter 8 besitzt gemäß Fig. 8 eine Ausnehmung 26, in die das Fixierelement 22 im verriegelten Zustand des Messeinsatzes 25 eingreift. Bezugsziffer 27 bezeichnet die Trennlinie des Umlenkspiegelhalters 8 in Längsrichtung. Der Umlenkspiegelhalter 8 umfasst im Bereich des Messrohrs 7 eine Mehrzahl von Öffnungen 28.

Die Ultraschallwandler 2, 3 sind im Gehäuse 1 des Ultraschallzählers, parallel zur Strömungsrichtung, angeordnet. Hierdurch kann der Messeinsatz 25 aus dem Gehäuse 1 herausgeschoben bzw. in dasselbe eingeschoben werden, ohne dass die Ultraschallwandler 2, 3 demontiert werden müssen.

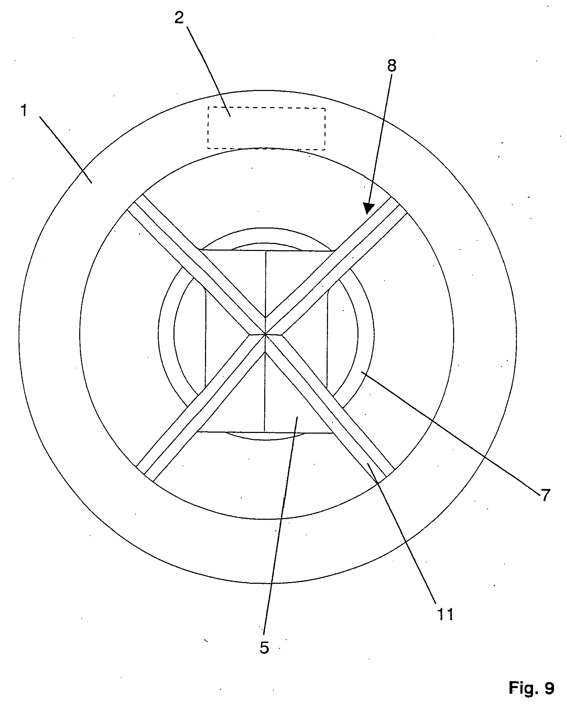

Figur 9 zeigt eine Draufsicht auf den Umlenkspiegelhalter 8 aus stromaufseitiger Sicht. Der Umlenkspiegelhalter 8 umfasst zwei gekreuzt verlaufende Haltestege 11, mit denen eine Strömungsgleichrichtung erzielt wird. Im Mittelbereich des Umlenkspiegelhalters 8 ist der Umlenkspiegel 5 positioniert.

Verschiedene Merkmale der vorstehend beschriebenen Ausführungsformen des erfindungsgemäßen Ultraschallzählers können in beliebiger Weise untereinander ausgetauscht werden.

Mit der vorliegenden Erfindung wird ein neuartiger Ultraschallzähler zur Verfügung gestellt, dessen Umlenkspiegel frei von Ablagerungen ist und damit eine verbesserte Langzeitstabilität aufweist. Gleichzeitig ist der Ultraschallzähler in einfacher und kostengünstiger Weise herzustellen. Die Erfindung stellt daher einen ganz wesentlichen Beitrag auf dem einschlägigen Gebiet der Technik dar.

## Patentansprüche

1. Ultraschallzähler zur Bestimmung der Durchflussmenge eines strömenden Mediums, insbesondere einer Flüssigkeit oder eines Gases mit einem Gehäuse (1), einer innerhalb des Gehäuses (1) angeordneten Messstrecke (4), entlang der eine Laufzeitmessung, insbesondere Differenzlaufzeitmessung, durchführbar ist, mindestens einem Ultraschallwandler (2), mindestens einem Umlenkspiegel (5), mittels dem die Ultraschallwelle des Ultraschallwandlers (2) umgelenkt wird, einem Umlenkspiegelhalter (8) mit einem langgezogenen Spiegelhalterfortsatz (18) mit einer gewölbten Leitfläche an dessen Oberseite auf der Seite des Zulaufs des Mediums, wobei der Spiegelhalterfortsatz (18) auf der Seite des Zulaufs des Mediums die Oberfläche des Umlenkspiegels (5) im Wesentlichen bündig fortführt und zur Seite des Zulaufs des Mediums hin derart verlängert, dass sich eine Rezirkulationszone (16) des Mediums in den Bereich des Spiegelhalterfortsatzes (18) verschiebt.

2. Ultraschallzähler nach Anspruch 1,
**dadurch gekennzeichnet, dass** der Umlenkspiegelhalter (8) aus zwei in Fließrichtung des Mediums getrennten Hälften aufgebaut ist.

3. Ultraschallzähler nach Anspruch 1 oder 2,
**dadurch gekennzeichnet, dass**
zwei Umlenkspiegel (5, 6) vorgesehen sind, der Bereich zwischen den Umlenkspiegeln (5, 6) von einem Messrohr (7) umgeben ist und der Umlenkspiegelhalter (8) Mittel zur Fixierung des Messrohrs (7) aufweist.

4. Ultraschallzähler nach einem der vorhergehenden Ansprüche,
**dadurch gekennzeichnet, dass**
der Umlenkspiegel (5) entlang seines Umfangs zueinander parallele Halteflächen aufweist.

5. Ultraschallzähler nach einem der vorhergehenden Ansprüche,
**dadurch gekennzeichnet, dass**
der Umlenkspiegelhalter (8) sowohl den einen Umlenkspiegel (5) als auch den weiteren Umlenkspiegel (6) trägt und der Umlenkspiegelhalter (8) über ein insbesondere zentral angeordnetes Fixierelement (22) in Position gehalten wird.

6. Ultraschallzähler nach einem der vorhergehenden Ansprüche,
**dadurch gekennzeichnet, dass** Umlenkspiegelhalter (8), Umlenkspiegel (5 bzw. 6) und Messrohr (7) einen Messeinsatz (25) bilden, der als Einheit aus dem Gehäuse (1) des Ultraschallzählers heraus- bzw. in dieses hineinschiebbar ist.

## Claims

1. Ultrasonic meter for determining the flow rate of a flowing medium, in particular a liquid or a gas, comprising a housing (1), a measuring section (4) arranged within the housing (1), with a time-of-flight measurement, in particular a differential time-of-flight measurement, being performable along said measuring section, at least one ultrasonic transducer (2), at least one deflection mirror (5), by means of which the ultrasonic wave of the ultrasonic transducer (2) is deflected, a deflection mirror holder (8) with an elongate mirror holder extension (18) with an arched guiding face at the top side thereof on the side of the inflow of the medium, wherein the mirror holder extension (18) continues the surface of the deflection mirror (5) in a substantially flush manner on the side of the inflow of the medium and extends it to the side of the inflow of the medium in such a way that a recirculation zone (16) of the medium shifts into the region of the mirror holder extension (18).

2. Ultrasonic meter according to Claim 1,
**characterized in that**
the deflection mirror holder (8) is constructed from two halves which are separated in the flow direction of the medium.

3. Ultrasonic meter according to Claim 1 or 2,
**characterized in that**
provision is made of two deflection mirrors (5, 6), the region between the deflection mirrors (5, 6) is surrounded by a measurement tube (7) and the deflection mirror holder (8) has means for fixing the measurement tube (7).

4. Ultrasonic meter according to one of the preceding claims,
**characterized in that**
the deflection mirror (5) has holding faces, which are parallel to one another, along the circumference thereof.

5. Ultrasonic meter according to one of the preceding claims,
**characterized in that**
the deflection mirror holder (8) carries both the one deflection mirror (5) and the further deflection mirror (6) and the deflection mirror holder (8) is held in position by way of a fixing element (22) which, in particular, is arranged centrally.

6. Ultrasonic meter according to one of the preceding claims,
**characterized in that**
deflection mirror holder (8), deflection mirror (5 and/or 6) and measurement tube (7) form a measuring insert (25) which can be displaced out of, or into, the housing (1) of the ultrasonic meter as a unit.

## Revendications

1. Compteur à ultrasons destiné à déterminer le débit de passage d'un fluide en écoulement, en particulier d'un liquide ou d'un gaz, présentant un boîtier (1), un parcours de mesure (4) disposé à l'intérieur du boîtier (1), le long duquel une mesure de temps de passage et en particulier une mesure différentielle de temps de passage peut être exécutée, au moins un convertisseur d'ultrasons (2), au moins un miroir de déviation (5) au moyen duquel l'onde ultrasonore du convertisseur d'ultrasons (2) est déviée, un support (8) de miroir de déviation ayant un prolongement (18) allongé du support de miroir comportant une surface de guidage bombée sur sa face supérieure du côté de l'admission du fluide, dans lequel, du côté de l'admission du fluide, le prolongement de support de miroir (18) prolonge la surface du miroir de déviation (5) sensiblement de niveau avec celle-ci et se prolonge du côté de l'admission de fluide de manière à ce qu'une zone de recirculation (16) du fluide se décale dans la région du prolongement (18) du support de miroir.

2. Compteur à ultrasons selon la revendication 1, **caractérisé en ce que** le support (8) de miroir de déviation est constitué de deux moitiés séparées dans le sens de l'écoulement du fluide.

3. Compteur à ultrasons selon la revendication 1 ou 2, **caractérisé en ce qu'**il est prévu deux miroirs de déviation (5, 6), **en ce que** la région comprise entre les miroirs de déviation (5, 6) est entourée par un tube de mesure (7) et **en ce que** le support (8) de miroir de déviation présente des moyens de fixation du tube de mesure (7).

4. Compteur à ultrasons selon l'une des revendications précédentes, **caractérisé en ce que** le miroir de déviation (5) présente des surfaces de support parallèles l'une à l'autre le long de sa périphérie.

5. Compteur à ultrasons selon l'une des revendications précédentes, **caractérisé en ce que** le support (8) de miroir de déviation porte à la fois le premier miroir de déviation (5) et l'autre miroir de déviation (6) et **en ce que** le support (8) de miroir de déviation est maintenu en position par l'intermédiaire d'un élément de fixation (22) notamment disposé au centre.

6. Compteur à ultrasons selon l'une des revendications précédentes, **caractérisé en ce que** le support (8) de miroir de déviation, les miroirs de déviation (5 ou 6) et le tube de mesure (7) forment un insert de mesure (25) qui peut être extrait du boîtier (1) du compteur à ultrasons ou y être inséré en tant qu'entité.
